# EUROPEAN PATENT SPECIFICATION

(11) **EP 2 532 556 B1**
(45) Date of publication and mention of the grant of the patent: **29.01.2014**
(21) Application number: 12168180.3
(22) Date of filing: 16.05.2012
(51) Int. Cl.: B60R 13/10

(54) **Registration Plate Holder**
Nummernschildhalter
Support de plaque d'immatriculation

(30) Priority: 07.06.2011 IT RE20110040
(43) Date of publication of application: 12.12.2012
(73) Proprietor: Modeltek SNC di Salvarani - Vacondio - Masi, 42012 Campagnola Emilia (Reggio Emilia) (IT)
(72) Inventor: Salvarani, Massimiliano, 42012 Campagnola Emilia (Reggio Emilia) (IT)
(74) Representative: Corradini, Corrado

(56) References cited:
- US-A1- 2008 179 486

## Description

The present invention generally concerns a registration plate holder for motor-vehicles.

As known, a motor-vehicle schematically comprises a bearing structure, commonly referred to as chassis, the function of which is to support and connect the wheelbase, frame, engine parts and superstructure of the motor-vehicle; a rear fork, commonly referred to as swing arm, suitable for connecting the chassis to the rear wheel; and a front fork for connecting the chassis to the front wheel.

In the rear part of the chassis, commonly referred to as the tailgate, a vehicle registration plate is usually fastened, i.e. a metal plate on which a motor-vehicle identification number is engraved, which is at times fixed and supported by a flat plastic body referred to as the registration plate holder. The registration plate holder is in turn fixed to a structural element of the motor-vehicle, which may be conformed as a simple metal frame or a plastic shaped body which serves as a mudguard, to prevent water or possible debris raised by the rear wheel during motion from being projected rearwards and upwards.

Despite this solution, when the road is extremely wet, some of the water raised by the rear wheel might still reach the rider and/or passenger of the motor-vehicle, wetting and dirtying them.

Thus, an objective of the present invention is to overcome the previously mentioned drawback, by means of a simple, rational and relatively inexpensive solution.

US 2008/0179486 A1 discloses a motor vehicle and an use according to the preambles of claims 1 and 11.

The objectives are attained by the characteristics of the invention indicated in the independent claim 1. The dependent claims outline preferred and/or particularly advantageous aspects of the invention.

In particular, an embodiment of the invention discloses a registration plate holder for a motor-vehicle, comprising a registration plate holder which in turn comprises:
a first flat body having two opposite larger faces, a first face of which is suitable for supportingly receiving a vehicle registration plate and a second face suitable for applying to a structural element of the motor-vehicle, and
a second flat body having two opposite larger faces arranged parallel to the larger faces of the first flat body, which is coupled to the first flat body so as to be able to slide with respect thereto, in a perpendicular direction to the thickness thereof, between a retracted position, in which most of the second flat body is superimposed on the first flat body, and an extracted position, in which most of the second flat body projects with respect to the first flat body whereby

the registration plate holder is fixed behing the rear wheel of the motor vehicle, and to the structural element such that the extraction movement of the second flat body occurs from above in a downwards direction.

Thanks to this solution, when the second flat body is moved to the extracted position, it advantageously increases the extension of the registration plate holder, and possibly of the rear mudguard to which it is applied, so as to prevent the water raised by the rear wheel - when it is raining - from wetting and dirtying the rider or the passenger or anyone else following along the road.

According to an aspect of the invention, the registration plate holder comprises at least a reflector element applied on one of the larger faces of the second flat body.

Thus, when the second flat body is moved to the extracted position, the reflector element makes the motor-vehicle more visible to all vehicles following it on the road.

According to a further aspect of the invention, the registration plate holder comprises stop means for stopping the second flat body at an extracted and retracted position.

This solution advantageously prevents the two flat bodies of the registration plate holder from being accidentally separated during use.

According to a further aspect of the invention, the first and second flat body are made of a plastic material.

In this way, the registration plate holder is particularly inexpensive to obtain and light.

In a further aspect of the invention, the second flat body has a smaller thickness than the first flat body and the first flat body is preferably provided with a seating suitable for slidably receiving the second flat body, possibly over the entire thickness thereof.

In this way, the registration plate holder is advantageously very compact and relatively small in size.

According to an aspect of the invention, the registration plate holder may comprise stop means for stopping the second flat body in at least one intermediate position between the aforementioned extracted and retracted positions.

With this solution, a user may advantageously adjust the amount of the portion of the second flat body that projects from the first flat body.

In a further aspect of the invention, the registration plate holder comprises a support plate fixed to the second larger face of the first flat body, which can be interposed between the first flat body and the structural element of the motor-vehicle to which it is applied.

Thanks to this support plate, the registration plate holder can be advantageously fixed to different motor-vehicle models.

In a further aspect of the invention, the registration plate of the motor vehicle is fastened on the first face of the first flat body of the plate holder, such that the second flat body can move between the retracted position and the extracted position by sliding with respect to both the first flat body and the registration plate.

In this way, the registration plate holder can advantageously perform the function thereof even when the registration plate has already been fitted on the motor vehicle.

In practice, the registation plate is fixed only to the first flat body while it is not fixed to the second flat body, which is therefore deconstrained and free to move with respect to the registration plate.

In this way, the second flat body can advantageously be displaced from the retracted position to the extracted position, without interfering with the registration plate which is fixed to the first flat body, thus increasing the extension of the plate holder with the purpose of preventing the water raised by the rear wheel, in rainy conditions, from wetting and dirtying the driver or passenger or any other person following on the road.

In a further embodiment of the invention, a new use is disclosed of a registration plate holder as a mudguard, in which the registration plate holder comprises a first flat body having two opposite larger faces, of which a first face is suitable for supportingly receiving a registration plate and a second face is suitable for being applied to a structural element of a motor vehicle, and a second flat body having two opposite larger faces arranged parallel to the larger faces of the first flat body, which is coupled to the first flat body such as to able to slide with respect to the first flat body, in a perpendicular direction to a thickness thereof, between a retracted position, in which most of the second flat body is superposed on the first flat body, and an extracted position, in which most of the second flat body projects with respect to the first flat body whereby the registration plate holder is fixed behind the rear wheel and to the structural element of the motor vehicle, and is applied to the structural element in such away that the extraction movement of the second flat body takes place starting from a top in a downwards direction.

This embodiment of the invention attains substantially the same advantages as the preceding embodiment, i.e. it advantageously increases an extension of the registration plate holder, such as to prevent water raised by the rear when in rainy conditions from wetting and dirtying the driver or passenger or any other person following on the road.

In this case too, the preferred aspects of the registration plate holder are the same as those that have been mentioned herein above in relation to the motor vehicle.

Further characteristics and advantages of the invention will be clear from the description that follows provided purely by way of non-limiting example, with reference to the figures illustrated in the attached drawings.
Figure 1 is the side view of a motorcycle.
Figure 2 is the rear view of the motorcycle of figure 1.
Figure 3 is a perspective view of a registration plate holder according to the invention.
Figure 4 is a top view of the registration plate holder of figure 3.
Figure 5 is a bottom view of the registration plate holder of figure 3.
Figure 6 is the section VI-VI of figure 4, shown in enlarged scale.
Figure 7 is the detail VII of figure 6 in enlarged scale.
Figure 8 is a perspective view of the registration plate holder of figure 3 complete with the vehicle registration plate and universal support plate.
Figure 9 is a bottom view of the assembly of figure 8.

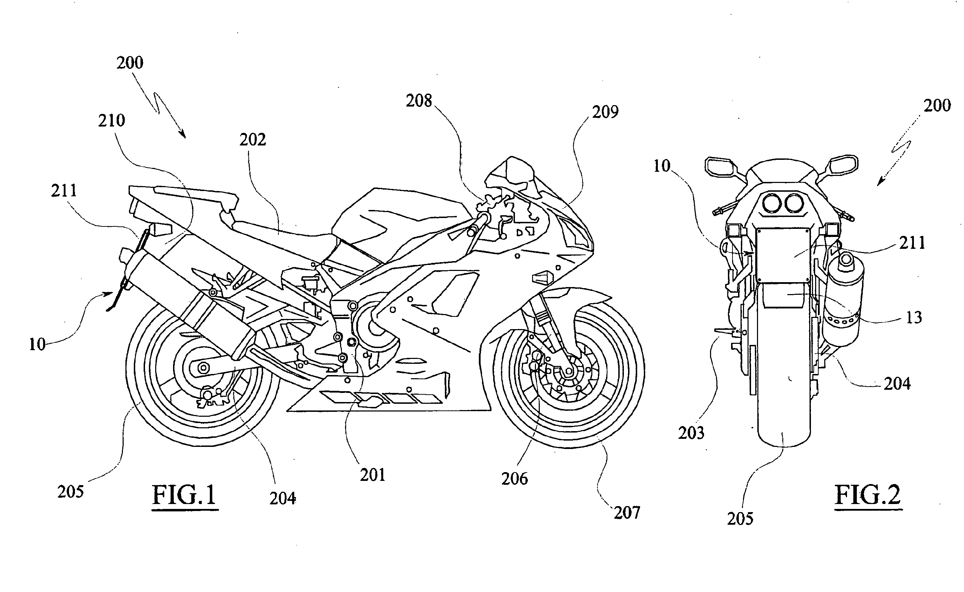

An embodiment of the present invention generally refers to a motor-vehicle 200, for example of the type illustrated and described by way of non-limiting example with reference to figures 1 and 2.

The motor-vehicle 200 comprises a bearing structure 201 (visible solely partly), commonly referred to as the chassis, the function of which is to support and connect the frame, moving parts, engine and superstructure parts of the motor-vehicle 200. The rear part of the chassis 201, commonly referred to as the tailgate, supports a seating 202 which defines a saddle for the rider and a possible passenger.

Foot rests 203 are usually fixed to the chassis 201 there, the foot-rests 203 being elements projecting from the opposite sides of the motor-vehicle 200 that allow the correct posture of the feet of the rider, and to which the gear and rear brake levers are usually associated. The motor-vehicle 200 further comprises a rear fork 204, commonly referred to as swing arm, adapted to connect the chassis 201 to the rear wheel 205, and a front fork 206 suitable for connecting the chassis 201 to the front wheel 207. The front fork 206 is connected with a handlebar 208 adapted to be grasped by the rider to control and steer the motor-vehicle. Most of the elements for controlling the motor-vehicle 200, including the throttle grip, the clutch lever and the front brake lever are associated to the handlebar 208. In some cases, the handlebar is received within an aerodynamic fairing 209, commonly referred to as top fairing, which can also be extended along the opposite lateral sides of the motor-vehicle 200, to cover the chassis 201 more or less integrally.

Beneath the tail of the motor-vehicle 200 there is usually fixed a rear mudguard 210, usually made of shaped plastic, which projects downwards, which prevents water or other debris raised by the rear wheel 205 during motion, from being projected rearwards and upwards, not only with the risk of dirtying the rider and passenger, but also creating a hazard for the vehicles that follow along the road.

The rear mudguard 210 usually also serves the structural function of supporting a vehicle registration plate 211, i.e. a metal plate on which the identification number of the motor-vehicle 200 is engraved.

The vehicle registration plate 211 can be fixed to the rear mudguard by interposing a registration plate holder 10. In some embodiments, the rear mudguard 210 could be absent and replaced by a simple support for fixing the registration plate holder 10.

In any case, the plate holder 10 is generally aligned with the rear wheel 205 of the motor vehicle 200, as clearly visible in figure 2.

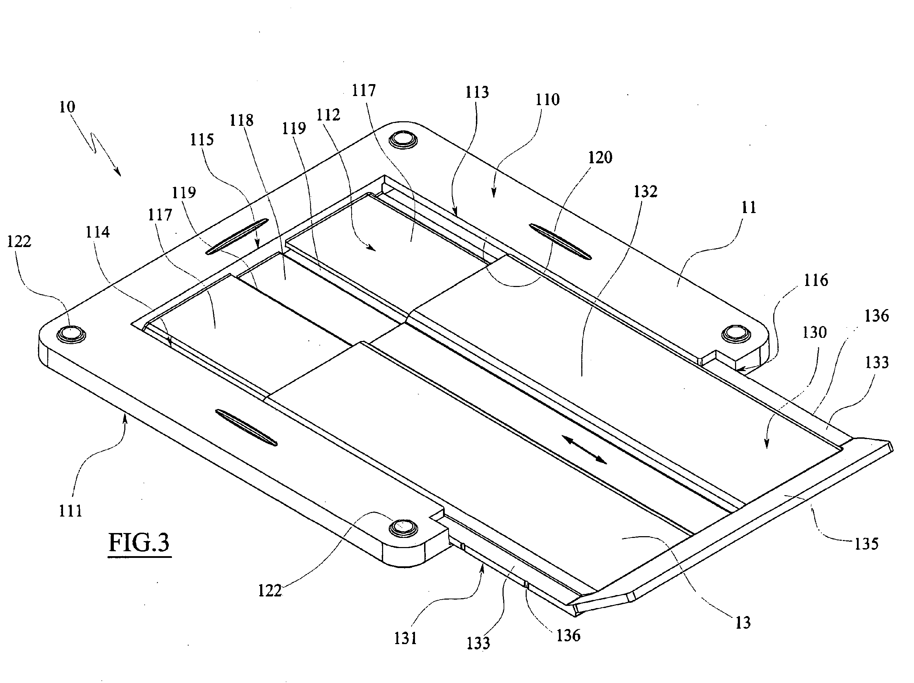

As illustrated in figure 3, a registration plate holder 10 according to the invention comprises two substantially flat bodies, which are preferably made of plastic material, for example via a moulding process.

The expression substantially flat body is generally used to indicate a body having two prevailing dimensions (width and length) with respect to a third dimension (thickness). Thus, a substantially flat body has and provides two opposite faces having an extension that is considerably larger with respect to all the remaining faces of the body, and which hereinafter in the present description will be simply referred to as "larger faces". Within this definition, the larger faces of a substantially flat body can also be structured and/or have ribs, recesses and reliefs.

As previously mentioned, the registration plate holder 10 comprises two flat bodies, a first flat body 11 and a second flat body 13 coupled to the first, both substantially rectangular-shaped (in plan view).

The larger faces of the first flat body 11 are indicated with 110 and 111, while the larger faces of the second flat body 13 are indicated with 130 and 131.

A seating 112 is provided in the first flat body 11 there, which is configured as a cavity substantially located at the centre of the larger face 110. The seating 112 has two dimensions (width and length) prevailing with respect to a third one (depth). In this case, the width and the length of the seating 112 are intended in the same direction respectively of the width and length of the first flat body 11, and the depth is intended to mean in the same direction as the thickness of the first flat body 11. In the direction of the width, the seating 112 is closed on both opposite sides 113 and 114, while in the length direction, the seating 112 is closed only on one side 115, having - on the opposite side-a mouthpiece 116 which opens in the thickness of the first flat body 11.

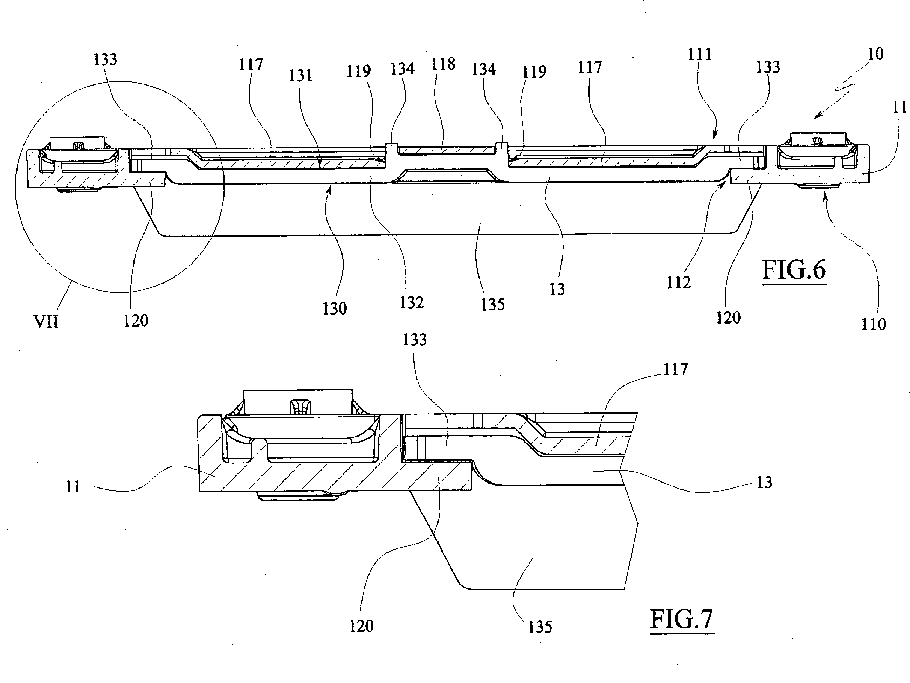

The seating 112 has a substantially constant transverse section in the direction of the length, i.e. with respect to any section plane perpendicular to the direction of the length. As illustrated in figure 6, such transverse section is closed on the bottom on a profiled wall having two longitudinal sections 117 in relief inwards the seating 112, between which a lowered longitudinal section 118 is defined. The lowered section 118 is separated from the sections in relief 117 by two slits 119 with longitudinal development and having limited length.

The transverse section of the seating 112 is open at the larger face 110 of the first flat body 11, with respect to which it however has two undercut lateral portions, positioned on mutually opposite parts length-wise, each of which is defined by a fin 120 which develops in the longitudinal direction, and which projects cantilevered from a lateral side of the first flat body 11 towards the centre of the seating 112.

The seating 112 snugly receives the second flat body 13, the larger faces 130 and 131 of which are thus parallel to the larger faces 110 and 111 of the first flat body 11. The thickness of the second flat body 13 is smaller than the thickness of the first flat body 11, practically equivalent to the depth of the seating 112, so that the larger face 131 is in contact or almost in contact with the bottom of the seating 112 and that the opposite larger face 130 is substantially flush, or in any case does not project, with respect to the larger face 110 of the first flat body 11.

More in detail, the second flat body 13 has a constant transverse section in the direction of the length thereof, i.e. with respect to any sectional plane orthogonal to the direction which defines the length thereof, and having a shape conjugated to that of the transverse section of the seating 112. In practice, the second flat body 13 comprises a central portion 132 with a longitudinal development that is superimposed on the bottom wall of the seating 112, and from which two opposite lateral fins 133 project, also with longitudinal development, each of which is introduced beneath a corresponding projecting fin 120 of the first flat body 11.

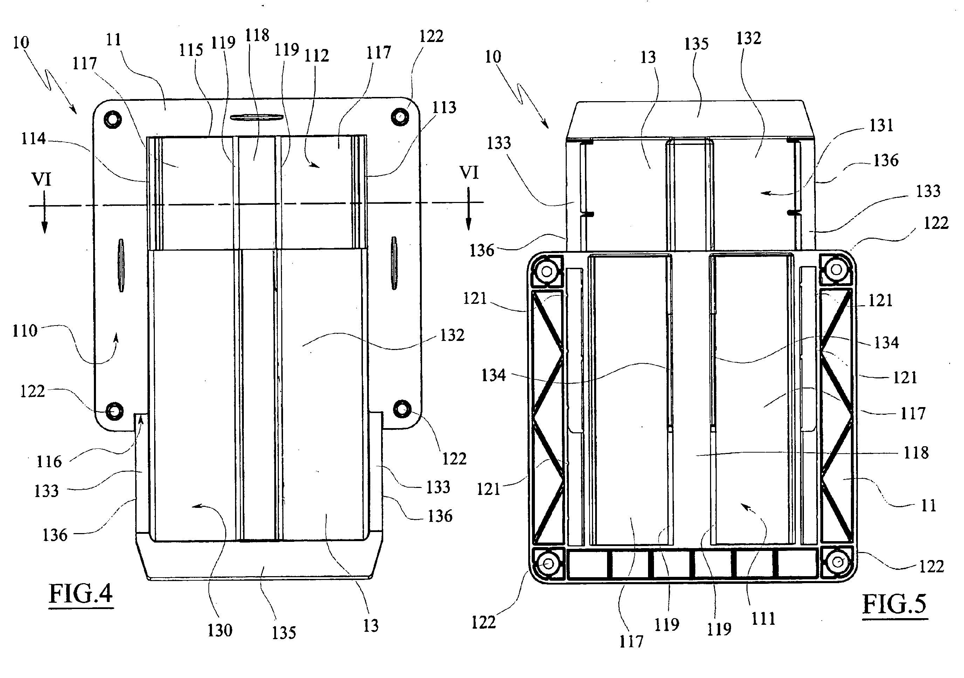

Thus, the second flat body 13 is entirely constrained to the first flat body 11, with respect to which it can only slide forwards and backwards in the longitudinal direction, in the manner of a drawer guided by the seating 112. The second flat body 13 also has two thin ribs 134 which project from the larger face 131 and which are engaged in the longitudinal slits 119 of the first flat body 11 (see figures 5 and 6).

As the longitudinal slits 119 are of limited length, the coupling thereof with the thin ribs 134 prevents the second flat body 13 from completely slipping out from the seating 112 and blocks it in a maximum extraction position, in which most of the second flat body 13 projects laterally beside the first flat body 11. From this position of maximum extraction, the second flat body 13 can be pushed into the seating 112 until it abuts against the side 115, which is destined to stop the second flat body 13 in a position of maximum insertion, in which most of the second flat body 13 is superimposed and thus contained in the overall dimensions of the first flat body 11.

In this position of maximum insertion, only a narrow portion 135 of the second flat body 13 remains projecting outwards, and is configured as an inclined tang destined to be grasped by the user, to drag the second flat body 13 to slide once again towards the position of maximum extraction.

Note that the dimensions of the seating 112 and of the second flat body 13 are selected such that the sliding of the second flat body 13 with respect to the first flat body 11 occurs with some friction, which should be overcome manually without excessive effort, but at the same time it should ensure that the second plate cover 13 cannot spontaneously slide with respect to the first flat body 11, due to gravity or vibrations.

According to this embodiment of the invention, the registration plate holder 10 also comprises stop means suitable for stopping the second flat body 13 at various intermediate positions between the position of maximum insertion and that of maximum extraction. In this case (see figures 4 and 5), the stop means comprise a plurality of small cavities 136 projecting from the free side of the lateral fins 133 of the second flat body 13, which are destined to corresponding small reliefs 121 in a snap-fit, the small reliefs being provided along the closed sides 113 and 114 of the seating 112.

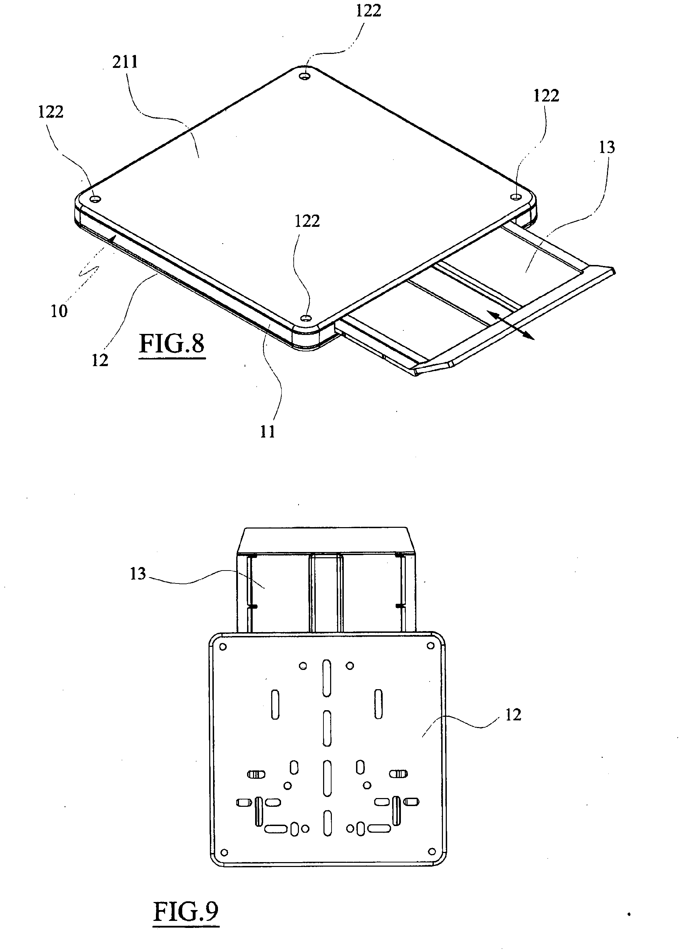

As illustrated in figure 8, the larger face 110 of the first flat body 11 is adapted to receive supporting the vehicle registration plate 211 thereon. As previously mentioned, the vehicle registration plate 211 is substantially configured as a plate, and therefore it will be applied coplanarly on the larger face 110 of the first flat body 11, and it be fixed directly to the first flat body 11 by means of a plurality of screws engaged through a same number of through holes 122 provided at the corners of the first flat body 11, externally with respect to the seating 112. Obviously, the width and the length of the first flat body 11 may vary according to the dimensions of the vehicle registration plate 211, just as the shape - in plan view - may also vary.

It is specified that the registration plate 211 is fixed only to the first flat body 11 while it is not fixed to the second flat body 13, such that the second flat body 13 is also free to move with respect to the registration plate 211, as clearly illustrated in figures 8 and 9.

In this way, when in the maximum extraction position, most of the second plate 13 projects laterally not only from the first flat body 11, but also from the registration plate 211.

The opposite larger face 111 of the first flat body 11 is suitable for directly fixing on the rear mudguard 210 of the motor-vehicle 200 or on any other structural element of the motor-vehicle 200 that replaces the rear mudguard 210 as explained herein above, possibly by interposing a special support plate 12 which enables it to be fixed on any type of motorcycle.

In particular, the registration plate holder 10 should be fixed so that the extraction movement of the second flat body 13 occurs from the top downwards. Thus, when the second flat body 13 is extracted, it advantageously increases the extension of the rear mudguard 210 towards the ground, covering the rear wheel 225 more fully, so that especially when it rains it prevents the water raised by the rear wheel from wetting and dirtying the rider or the passenger or anyone following along the road.

As the rain also often implies poor conditions of visibility, the larger face 130 of the second flat body 13 can be provided with adhesives or other reflective elements, thus making the motor-vehicle 200 more visible to those following when the second flat body 13 is in the extracted position.

## Claims

1. A motor vehicle (200) comprising a registration plate holder (10) comprising a first flat body (11) having two opposite larger faces, a first face (110) of which is suitable for supportingly receiving a vehicle registration plate (211) and a second face (111) of which is applied to a structural element (210) of the motor-vehicle (200), and a second flat body (13) having two opposite larger faces (130, 131) arranged parallel to the larger faces of the first flat body, which is coupled to the first flat body (11) such as to be able to slide with respect thereto, in a perpendicular direction to the thickness thereof, between a retracted position, in which most of the second flat body (13) is superposed on the first flat body (11), and an extracted position, wherein most of the second flat body (13) projects with respect to the first flat body (11), **characterised in that** the registration plate holder (10) is fixed behind the rear wheel (205) and to the structural element (210) of the motor vehicle (200), and is applied to the structural element (210) in such a way that the extraction movement of the second flat body (13) takes place starting from a top in a downwards direction.

2. A motor vehicle (200) according to claim 1, **characterised in that** the registration plate holder (10) comprises at least a reflector element applied on one (130) of the larger faces of the second flat body (13).

3. A motor vehicle (200) according to claim 1, **characterised in that** the registration plate holder (10) comprises stop means (115, 119, 134) for stopping the second flat body (13) in the extracted and retracted positions.

4. A motor vehicle (200) according to claim 1, **characterised in that** said first and second flat body (11,13) are made of a plastic material.

5. A motor vehicle (200) according to claim 1, **characterised in that** the second flat body (13) has a smaller thickness with respect to the first flat body (11).

6. A motor vehicle (200) according to claim 1, **characterised in that** the second flat body (13) is slidably received in a seating (112) provided in the first flat body (11).

7. A motor vehicle (200) according to claims 5 and 6, **characterised in that** said seating (112) is conformed such as to receive an entire thickness of the second flat body (13).

8. A motor vehicle (200) according to claim 1, **characterised in that** the registration plate holder (10) comprises stop means (121, 136) for stopping the second flat body (13) in at least an intermediate position between the extracted position and the retracted position.

9. A motor vehicle (200) according to claim 1, **characterised in that** it the registration plate holder (10) comprises a support plate (12) fixed to the second larger face (111) of the first flat body (11), suitable for being interposed between the first flat body (11) and the structural element (210) of the motor-vehicle (200) to which it is applied.

10. Motor-vehicle (200) according to any one of the preceding claims, **characterised in that** it comprises a registration plate (211) which is fixed on the first face (110) of the first flat body (11) of the registration plate holder (10), such that the second flat body (13) can move between the retracted position and the extracted position by sliding with respect to the first flat body (11) and the registration plate (211).

11. Use of a registration plate holder (10) as a mudguard, the registration plate holder (10) comprising a first flat body (11) having two opposite larger faces, of which a first face (110) is suitable tor supportingly receiving a registration plate (211) and a second face (11) is suitable tor being applied to a structural element (210) of a motor vehicle (200), and a second flat body (13) having two opposite larger faces (130, 131) arranged parallel to the larger faces of the first flat body, which is coupled to the first flat body (11) such as to be able to slide with respect to the first flat body (11), in a perpendicular direction to a thickness thereof, between a retracted position, in which most of the second flat body (13) is superposed on the first flat body (11), and an extracted position, in which most of the second flat body (13) projects with respect to the first flat body (11), **characterized in that** the registration plate holder (10) is fixed behind the rear wheel (205) and to the structural element (210) of the motor vehicle (200), and is applied to the structural element (210) in such a way that the extraction movement of the second flat body (13) takes place starting from a top in a downwards direction.

## Patentansprüche

1. Kraftfahrzeug (200), einen Nummernschildhalter (10) umfassend, der einen ersten flachen Körper (11) umfasst, der zwei gegenüberliegende größere Flächen aufweist, von denen eine erste Fläche (110) geeignet ist, ein Nummernschild (211) stützend aufzunehmen, und von denen eine zweite Fläche (111) an einem Bauelement (210) des Kraftfahrzeuges (200) angebracht ist, sowie einen zweiten flachen Körper (13), der zwei gegenüberliegende größere Flächen (130, 131) aufweist, die parallel zur den größeren Flächen des ersten flachen Körpers angeordnet sind, und der derart mit dem ersten flachen Körper (11) verbunden ist, dass er im Verhältnis zu diesem in einer senkrecht zu dessen Dicke liegenden Richtung gleiten kann, zwischen einer eingezogenen Position, in der der größte Teil des zweiten flachen Körpers (13) über dem ersten flachen Körper (11) liegt, und einer ausgezogenen Position, in der der größte Teil des zweiten flachen Körpers (13) über den ersten flachen Körper (11) hinausragt, **dadurch gekennzeichnet, dass** der Nummernschildhalter (10) hinter dem Hinterrad (205) und am Bauelement (21) des Kraftfahrzeugs (200) befestigt ist und derart am Bauelement (210) angebracht ist, dass die Auszugsbewegung des zweiten flachen Körpers (13) von oben in eine Abwärtsrichtung stattfindet.

2. Kraftfahrzeug (200) nach Anspruch 1, **dadurch gekennzeichnet, dass** der Nummernschildhalter (10) mindestens ein Reflektorelement umfasst, das an einer (130) der größeren Flächen des zweiten flachen Körpers (13) angebracht ist.

3. Kraftfahrzeug (200) nach Anspruch 1, **dadurch gekennzeichnet, dass** der Nummernschildhalter (10) Anschlagmittel (115, 119, 134) umfasst, um den zweiten flachen Körper (13) in der ausgezogenen und der eingezogenen Position zu stoppen.

4. Kraftfahrzeug (200) nach Anspruch 1, **dadurch gekennzeichnet, dass** der erste und der zweite flache Körper (11, 13) aus Kunststoff hergestellt sind.

5. Kraftfahrzeug (200) nach Anspruch 1, **dadurch gekennzeichnet, dass** der zweite flache Körper (13) im Verhältnis zum ersten flachen Körper (11) eine kleinere Dicke aufweist.

6. Kraftfahrzeug (200) nach Anspruch 1, **dadurch gekennzeichnet, dass** der zweite flache Körper (13) gleitfähig in einem Sitz (112) aufgenommen ist, der im ersten flachen Körper (11) bereitgestellt ist.

7. Kraftfahrzeug (200) nach Anspruch 5 und 6, **dadurch gekennzeichnet, dass** der Sitz (112) derart angepasst ist, dass er eine gesamte Dicke des zweiten flachen Körpers (12) aufnimmt.

8. Kraftfahrzeug (200) nach Anspruch 1, **dadurch gekennzeichnet, dass** der Nummernschildhalter (10) Anschlagmittel (121, 136) zum Stoppen des zweiten flachen Körpers (13) in mindestens einer Zwischenposition zwischen der ausgezogenen Position und der eingezogenen Position umfasst,

9. Kraftfahrzeug (200) nach Anspruch 1, **dadurch gekennzeichnet, dass** der Nummernschildhalter (10) eine Stützplatte (12) umfasst, die an der zweiten größeren Fläche (111) des ersten flachen Körpers (11) befestigt und dazu geeignet ist, zwischen dem ersten flachen Körper (11) und dem Bauelement (210) des Kraftfahrzeuges (200), an dem er angebracht ist, eingesetzt zu sein.

10. Kraftfahrzeug (200) nach einem der vorhergehenden Ansprüche, **dadurch gekennzeichnet, dass** es ein Nummernschild (211) umfasst, das derart an der ersten Fläche (110) des ersten flachen Körpers (11) des Nummernschildhalters (10) befestigt ist, dass sich der zweite flache Körper (13) zwischen der eingezogenen Position und der ausgezogenen Position bewegen kann, indem er im Verhältnis zum ersten flachen Körper (11) und dem Nummernschild (211) gleitet.

11. Verwendung eines Nummernschildhalters (10) als Schutzblech, wobei der Nummernschildhalter (10) einen ersten flachen Körper (11) umfasst, der zwei gegenüberliegende größere Flächen aufweist, von denen eine erste Fläche (110) geeignet ist, ein Nummernschild (211) stützend aufzunehmen, und von denen eine zweite Fläche (111) geeignet ist, an einem Bauelement (210) eines Kraftfahrzeuges (200) angebracht zu sein, sowie einen zweiten flachen Körper (13), der zwei gegenüberliegende größere Flächen (130, 131) aufweist, die parallel zur den größeren Flächen des ersten flachen Körpers angeordnet sind, und der derart mit dem ersten flachen Körper (11) verbunden ist, dass er im Verhältnis zu diesem in einer senkrecht zu dessen Dicke liegenden Richtung gleiten kann, zwischen einer eingezogenen Position, in der der größte Teil des zweiten flachen Körpers (13) über dem ersten flachen Körper (11) liegt, und einer ausgezogenen Position, in der der größte Teil des zweiten flachen Körpers (13) über den ersten flachen Körper (11) hinausragt, **dadurch gekennzeichnet, dass** der Nummernschildhalter (10) hinter dem Hinterrad (205) und am Bauelement (21) des Kraftfahrzeugs (200) befestigt ist und derart am Bauelement (210) angebracht ist dass die Auszugsbewegung des zweiten flachen Körpers (13) von oben in eine Abwärtsrichtung stattfindet.

## Revendications

1. Véhicule motorisé (200) comprenant un support de plaque d'immatriculation (10) comportant un premier corps plat (11) ayant deux faces opposées plus grandes, dont une première face (110) est adaptée pour supporter une plaque d'immatriculation du véhicule (211) et une deuxième face (111) est appliquée à un élément structurel (210) du véhicule motorisé (200), et un deuxième corps plat (13) comportant deux faces plus grandes opposées (130, 131) agencées parallèlement aux faces plus grandes du premier corps plat, qui est accouplé au premier corps plat (11) de manière à pouvoir glisser par rapport à celui-ci dans une direction perpendiculaire à son épaisseur entre une position rétractée, dans laquelle la plus grande partie du deuxième corps plat (13) est superposée au premier corps plat (11), et une position déployée, dans laquelle la plus grande partie du deuxième corps plat (13) fait saillie par rapport au premier corps plat (11), **caractérisé en ce que** le support de plaque d'immatriculation (10) est fixé derrière la roue arrière (205) et à l'élément structurel (210) du véhicule motorisé (200), et est appliqué à l'élément structurel (210) de telle sorte que le mouvement d'extraction du deuxième corps plat (13) a lieu en commençant depuis le haut en direction descendante.

2. Véhicule motorisé (200) selon la revendication 1, **caractérisé en ce que** le support de plaque d'immatriculation (10) comprend au moins un élément réflecteur appliqué sur l'une (130) des faces plus grandes du deuxième corps plat (13).

3. Véhicule motorisé (200) selon la revendication 1, **caractérisé en ce que** le support de plaque d'immatriculation (10) comprend un moyen d'arrêt (115, 119, 134) pour arrêter le deuxième corps plat (13) dans les positions déployée et rétractée.

4. Véhicule motorisé (200) selon la revendication 1, **caractérisé en ce que** lesdits premier et deuxième corps plat (11, 13) sont constitués en un matériau plastique.

5. Véhicule motorisé (200) selon la revendication 1, **caractérisé en ce que** le deuxième corps plat (13) présente une plus faible épaisseur que le premier corps plat (11).

6. Véhicule motorisé (200) selon la revendication 1, **caractérisé en ce que** le deuxième corps plat (13) est reçu de manière coulissante dans un siège (112) pourvu dans le premier corps plat (11).

7. Véhicule motorisé (200) selon les revendications 5 et 6, **caractérisé en ce que** ledit siège (112) est conformé de manière à recevoir une épaisseur complète du deuxième corps plat (13).

8. Véhicule motorisé (200) selon la revendication 1, **caractérisé en ce que** le support de plaque d'immatriculation (10) comprend un moyen d'arrêt (121, 136) pour arrêter le deuxième corps plat (13) dans au moins une position intermédiaire entre la position déployée et la position rétractée.

9. Véhicule motorisé (200) selon la revendication 1, **caractérisé en ce que** le support de plaque d'immatriculation (10) comprend une plaque de support (12) fixée à la deuxième face plus grande (111) du premier corps plat (11), adaptée pour être interposée entre le premier corps plat (11) et l'élément structurel (210) du véhicule motorisé (200) auquel il est appliqué.

10. Véhicule motorisé (200) selon l'une quelconque des revendications précédentes, **caractérisé en ce qu'**il comprend une plaque d'immatriculation (211) qui est fixée à la première face (110) du premier corps plat (11) du support de plaque d'immatriculation (10), de telle sorte que le deuxième corps plat (13) peut se déplacer entre la position rétractée et la position déployée en glissant par rapport au premier corps plat (11) et à la plaque d'immatriculation (211).

11. Utilisation d'un support de plaque d'immatriculation (10) comme garde-boue, le support de plaque d'immatriculation (10) comprenant un premier corps plat (11) comportant deux faces plus grandes opposées, dont une première face (110) est adaptée pour supporter une plaque d'immatriculation (211) et une deuxième face (11) est adaptée pour être appliquée à un élément structurel (210) d'un véhicule motorisé (200), et un deuxième corps plat (13) comportant deux faces plus grandes opposées (130, 131) agencées parallèlement aux faces plus grandes du premier corps plat, qui est accouplé au premier corps plat (11) de manière à pouvoir glisser par rapport au premier corps plat (11) dans une direction perpendiculaire à son épaisseur entre une position rétractée, dans laquelle la plus grande partie du deuxième corps plat (13) est superposée au premier corps plat (11), et une position déployée, dans laquelle la plus grande partie du deuxième corps plat (13) fait saillie par rapport au premier corps plat (11), **caractérisée en ce que** le support de plaque d'immatriculation (10) est fixé derrière la roue arrière (205) et à l'élément structurel (210) du véhicule motorisé (200), et est appliqué à l'élément structurel (210) de telle sorte que le mouvement d'extraction du deuxième corps plat (13) a lieu en commençant depuis le haut en direction descendante.
